# EUROPEAN PATENT APPLICATION

(11) **EP 4 631 714 A1**
(43) Date of publication of application: **15.10.2025**
(21) Application number: 24169904.0
(22) Date of filing: 12.04.2024
(51) Int. Cl.: B32B 5/02, B32B 5/18, B32B 5/26, B32B 7/09, B32B 7/12, B32B 15/00, B32B 27/12, B32B 27/32, B32B 27/34, B32B 27/36

(54) **AUTOMOTIVE STRUCTURAL PART**

(71) Applicant: Autoneum Management AG, 8406 Winterthur (CH)
(72) Inventor: Costa Liborio, Ivano, 8405 Winterthur (CH); Papadimas, Alexander, 8041 Zürich (CH)

(57) **Abstract**

Automotive structural part comprising a fiber reinforced thermoplastic core, and a first and a second skin, whereby the first and second skins cover opposite surfaces of the core thereby forming a sandwich and further comprising at least one protrusion raised above at least one of the skin surfaces facing away from the core and whereby the protrusion comprises core material, and whereby the skin at least in the area of the protrusion on its surface, consists of a filament mesh comprising macroscopic openings.

## Description

### Technical Field

The present invention is directed to an automotive structural part, for instance an impact resistance shield or plate, a method of producing such parts and the use of such structural part.

### Background Art

Automotive structural parts that are strong enough to carry loads, can withstand a large impact force and are used for heavy duty load floors, truck or car walls or impact protection panels or shields.

One area in need of an automotive structural part is the area where the batteries of battery electric vehicles are located and where a strong impact protection plate or impact shielding is required, mostly underneath the passenger compartment between the wheels, facing the road. As the battery housing is facing the road it is prone to impact events, like stone chipping, potholes and collisions with curb stones and other objects on the road. These impacts may damage the housing and even worse the batteries within. A high impact event may even pierce the housing and damage the batteries directly. Any damage to the housing, or worse to the batteries directly may result in a thermal runaway event of the batteries, potentially starting with the damage to a single cell and spreading to all surrounding cells.

An option to create such a structural automotive part would be a sandwich construction.

The ASTM defines a sandwich structure as follows: a structural sandwich is a special form of a laminated composite comprising of a combination of different materials that are bonded to each other so as to utilise the properties of each separate component to the structural advantage of the whole assembly.

A sandwich comprises of 3 main parts, a core material and face material laminated to both surfaces of the core material. The combination of two thin, stiff, and strong faces or skins are separated by a thick, light, and weaker core. The faces are adhesively bonded to the core to obtain a load transfer between the components.

As some areas are in such a high need for strength and impact protection a material sandwich may be used in combination with ribs.

One known sandwich material is the combination of glass filled thermoplastic core with skins based on unidirectional glass tapes -known as UD tapes - or Organosheets. The UD tapes are covering the full surface and are laid in multiple layers whereby the direction of the tape between the layers may be changed, possibly in-line with the previous layer or placed perpendicular to or at an angle to the previous layer. UD tapes allow for high mechanical performance of the sandwich construction so by stacking the laminate layers in a desired direction the overall performance of the sandwich can be tuned as desired.

A symmetrical sandwich construction with equal number of skin layers and equal orientation of layers on both sides of a core material reduces possible warpage. Warpage is increased in large parts where small differences in shrinkage of the skin layers can cause large warpage effects.

Sandwich parts may be compression moulded into a final shape, whereby the core material is pushed through the skin material to fill any ribs or protrusions on the surface to further enhance the structural performance of the sandwich part.

The use of UD tapes as skin layers has the disadvantage that the core layer cannot easily penetrate and fill any protrusion on the surface of the skin due to the close alignment of reinforcing filaments within each UD tape layer. The process of filling protrusions becomes an unpredictable process whereby the material takes the route of least resistance, for instance a faulty area in the layering of the UD tapes or a small deviation in the close alignment of the reinforcing fibers within the layers. The most material will push through one or two openings and fill the cavity by streaming over the skin surface. As the material streams over the surface, it cools and forms a break line between the material and the surface. The point at which these streams meet can also form break lines within the protrusion. These break lines are causing weak points under stress for instance when subjected to impact events. Hence the connection of ribs and other protrusions to the surface may become the weakest point in the structure, in particular during high impact events. Cracks may form in particular between the ribs and the main body structure, along the length of the ribs, thereby weakening the structure or impairing it.

Organosheets are similar to UD tapes, where again a thermoplastic matrix impregnates reinforcing fibers which are closely packed into the composite laminate structure. Organosheets may also be based on a woven reinforcement, however, just like with UD tapes, multiple layers may be stacked in desired orientations to achieve the desired properties. Again, the close alignment of the fibers within the Organosheet limits the flow of the core material through the skin, limiting the flow of core material into protrusions during compression moulding.

A potential solution to the restrictive and unpredictable flow of core material through the skin layer is to cut the skin layer at the points of or close to where protrusions are required. However, while enabling easier protrusion formation, this has a number of downsides, mainly that the filament network is cut and thereby weakened, introducing faults, and reducing the overall mechanical performance of the part. A further issue is that the core material will then only flow through the pre-cut zones which will fill the cavity by streaming over the surface from a limited number of cut openings, again providing a similar issue with break lines as described previously. Another downside is related to the process, where accurate placement of the cut sections of the skin below the protrusion cavity in the tool is paramount to ensuring good filling of the protrusion cavity, they may still be moved away by the flow of the material and/or by the closing of the mould. Furthermore, this technique cannot be used on complex ribbing patterns or structures, as in such cases the skin layer would be cut into pieces, while still enhancing the wrong flow of the core material during moulding.

An alternative solution is to over-mould the protrusion shapes or combine over-moulding the protrusions with the partial protrusions formed by forcing the core layer through the UD tape material to create a fully formed protrusion. Aside from the extra investment cost in further processing equipment and extra process complexity, the effect of break-lines and discontinuities within the protrusion or between the skins layer and the protrusion is difficult to overcome with this solution.

It is the object of the present invention to provide with an alternative automotive structural part covering the mechanical requirements without the problems of the prior art in particular with a better definition of any protrusions and ribbing without causing a reduction of the other properties and reducing the risk of creating unexpected weak areas within the final structure.

### Summary of invention

The object of the invention is achieved by automotive structural part comprising a fiber reinforced thermoplastic core layer, and a first and a second skin layer, whereby the first and second skin layer are laminated to opposite surfaces of the core layer thereby forming a sandwich, and further comprising at least one protrusion raised above at least one of the skin layer surface facing away from the core layer and whereby the protrusion comprises core material, according to claim 1, the use of such automotive structural part according to claim 16.

In particular, by the material of each skin layer, that is comprising a protrusion raised on it surface, consisting of a mesh structure comprising bundles of filaments, and whereby the bundles of filaments are arranged such that the mesh structure comprises macroscopic openings.

Surprisingly, by using macroscopic openings in a filament mesh structure made of bundles of filaments, it is possible to have larger openings in the structure of the skin without compromising the overall skin structure, while providing a better flow or distribution of the core material into the protrusion or protrusions on the surface during the moulding process. Due to the mesh structure of the skin material, there will be multiple openings substantially evenly spaced over the surface, the filling of the protrusions will be seamless and quicker as the flow can immediately after penetrating the mesh contact and bond to the adjacent streams resulting in stronger bonded protrusions on the surface of the skin substantially without creating break lines, eliminating the risk of failure upon impact.

Furthermore, the distribution of macroscopic openings throughout at least a region of the skin area creates a mesh surface that allows for the formation of protrusions into complex structures, as each macroscopic opening between the filament bundles behaves like passages or channels through which the core material is allowed to flow more readily during the moulding step, thus extremely complex protrusion shapes and protrusion geometries can be achieved.

The automotive structural part according to the invention comprises a sandwich construction consisting of a first and second skin layer laminated onto a fiber reinforced thermoplastic core layer arranged and between the first and second skin layer. Preferably the first and second skin layer may at least partially be penetrated by the core material to create a stronger lamination bond. At least the areas of protrusions will have a full penetration of the skin layer underneath the protrusion.

For the part to function according to the invention, it is not necessary to have a full surface coverage of the core layer on one or both sides with the respective skin layer, in certain areas it may be an advantage to omit the skin layer locally for instance to enable appliances to be embedded or to create compressed areas, example of this may include dome shapes or fixation points.

Protrusions in the scope of the invention as claimed may include but are not limited to at least one of a rib, a grid structure, a bead, a stiffening element, a fixation point, an aesthetic element, like a logo, a channelling element, an embossing element, or an air guiding element.

### The skin layers

The skin layer, that is comprising at least one protrusion raised on it surface, consists at least in the area of the protrusion of a mesh structure comprising bundles of filaments, and whereby the bundles of filaments are arranged such that the structure comprises macroscopic openings.

The filament mesh is a multilayer biaxial or multiaxial fabric formed from bundles of filaments, such that the structure of the fabric comprises macroscopic openings between the bundles of filaments being spaced apart in all axial directions.

The filament mesh structure as used according to the invention is preferably a multilayer multiaxial Non-Crimp Fabric (NCF). A multilayer multiaxial NCF is formed by stacking layers of filaments in different angles -multiaxial- to the neighbouring layer. By arranging the layers of filaments in spaced apart parallel bundles of filaments within each layer it is possible to create a mesh structure with macroscopic openings obtained between the bundles of filaments of the different layers or groups throughout the thickness of the fabric.

Preferably the bundles of filaments are fixated at the intersections. For instance, the intersecting bundles of filaments are fixated by stitching over the intersection. This has the advantage that the mesh is maintained during the handling and during the compression moulding. The fixation may be done with a thermoplastic bonding material for instance in the form of a bonding thread or bonding fibers. Preferably the thermoplastic bonding material is one of a polyester or polyamide.

Surprisingly, by reorganising the filaments of the NCF into bundles in such a manner as to ensure macroscopic openings between the filament bundles it is possible to optimize the flow of the core material through the skin layer while maintaining the mechanical properties of the skin layer and thus the overall sandwich construction.

The use of a multilayer multiaxial NCF with filament bundles aligned in 2 or more directions is preferred. The NCF may have between 2 and 12 layers or plies of parallel filament bundles spaced apart within one plane or layer.

The number of layers and number of filament bundles within one layer as well as the spacing between the filament bundles within one layer are chosen such that the required mechanical properties are given for the skin as well as the required number and size of the macroscopic openings within the mesh structure to enable a good uninterrupted flow through the mesh structure of the skin layer.

Although it may be possible to stack or layer multiple NCFs on top of each other to form the skin, it may be more difficult to align the openings to optimise the flow through the skin. For these additional appliances, like pins, within the mould might be necessary, but not really favourable.

Alternatively, the skin layer mesh structure can be created by an open weave of filament bundles with a warp and a weft and whereby the warp and the weft are formed by filaments bundles spaced apart to create an open weave having macroscopic openings.

Alternatively, the skin layer mesh structure may also be achieved by a knit of filaments or filament bundles, where the filaments or filament bundles are knitted in such a way that a mesh structure with macroscopic openings is maintained. Any combination of technologies to achieve the macroscopic openings and/or to maintain or fixate the mesh structure are within the scope of the current invention and may be used.

Any skin surface without protrusions may be covered by a multiaxial structure without a mesh with macroscopic openings, for instance by a multilayer multiaxial non crimp fabric, a structure of multilayer multiaxial unidirectional tapes or an Organosheet or woven fabric or any combination of those. These type of skin materials are based on tows or rovings of filaments.

Both skin materials with or without the mesh structure may use a tow or roving of filaments, whereby the tow may be arranged bundles in a substantial round cross section or like a flattened band type structure. The bundles of filaments may have any number of filaments depending on the material and thickness of the single filament, this may vary from 50 up to 50.000. For instance, a tow of 12k (12.000 filaments per bundle) is very common.

The filaments may be either filaments or long staple fibers, the filament or fibers may be twisted into yarn type structures. Preferably filaments are used to increase the tensile strength in the direction of the filaments.

The filaments within the tow or bundle may be between 8 and 35 µm on average.

During the fiberglass production the direct roving or tow may be treated with a special sizing to ensure compatibility with thermoplastic material used for the core and or pre impregnation of the skin, such as a polymer and/or copolymer of polypropylene PP, polycarbonate PC, polyamide PA or polyester.

The skin layers may be used as dry filament fabric or may be pre-impregnated with a polymer to allow easier handling and processing. Alternatively, the filament, filament bundles or tows may be coated with a thermoplastic polymer before creating the skin structure. The polymer used to pre-impregnate the skin layer or coat the filaments should be similar or at least compatible to the polymer of the core layer.

Preferably the skin is pre-impregnated with the same or a compatible polymer as the thermoplastic material of the core layer, preferably one of a polymer and/or copolymer of polypropylene PP, polyamide PA, polycarbonate PC, or polyester.

The filaments of the roving or tow used for the skins may be based on any of glass, carbon, basalt, aramid and or natural material, for instance hemp, kenaf material or any combination of such fibers. Different materials for the rovings may be combined to create the skin structure.

The skin layers may have an area weight of between 150 and 5000 g/m².

The thickness of the skin layer is between 0.1mm and 3mm thickness, preferably the skin thickness is between 0.4mm and 2.5mm.

In case the skin layers are impregnated the filament content may be between 50 and 90% by weight, preferably between 60 and 85% by weight.

The final skins on the trim part produced will be at least partly a combination of the original skin material in the form of the filaments and the matrix of the original pre-impregnation material as well as the core material partly pushed in between the filaments thereby integrally binding the skin layers to the core layer. In the area of the protrusions the full skin area will be penetrated with the core material as it is pushed through the macroscopic openings to fill the protrusions. Any pre impregnated resin may be moved into the protrusions or may stay partly within the mesh structure. The mesh structure should be such that the reinforcement fibers in the core material will migrate into the protrusions in equal quantities and distribution comparable to the core material. In particularly, the macroscopic openings do not work as a filter holding back the reinforcement fibers of the core material.

### Core material

The fiber reinforced thermoplastic material forming the core layer is comprising reinforcing staple fibers embedded in a polymer matrix.

The reinforcing staple fibers may be based on glass, aramid, carbon, basalt and/or natural, for instance hemp, kenaf material or any combination of such fibers. They may come from a recycled or reclaimed material source. Preferably glass is used.

The reinforcement fibers may have a fiber length of between 0.3- 60mm, preferably between 3 and 50mm.

The core layer may have a fiber content of between 0 and 60% by weight, preferably between 10 and 50% by weight.

In one preferred embodiment the core layer is a produced using a Long Fiber Thermoplast (LFT) or a direct Long Fiber Thermoplast (D-LFT or LFT-D) process.

The Long Fiber Thermoplast (LFT) process may be used to obtain the core layer by reheating pelletised core material comprising the matrix and staple fibers. The length of the pelletised core material defines the maximal length of the staple fibers in the core material. These fiber lengths are typically range from 2- 25 mm.

In the D-LFT process filament tows are feed into the extruder while heating up the matrix, due to the action of the extruder the tows are chopped into smaller pieces forming the staple fibers, while maintain a longer overall average length. The cutting of the filaments within the direct LFT process can enable a wide range of fiber lengths, however, the targeted fiber length in a D-LFT process is between 3-50 mm. In certain instances, fibers in the range of 100 mm length may be present due to variations in the in process cutting and the flow of material through the extruder(s), however, these are generally undesirable as they increase the force required to shape the material.

The reinforced thermoplastic core according to the invention comprises reinforcement fibers in a thermoplastic matrix. The thermoplastic matrix of the core comprises at least one of the following polymers: a polyolefin type material for instance polymer and/or co polymer of polypropylene PP, a polyamide type material for instance, polyamide-6 PA6, polyamide 66 PA66, a polyester based material, for instance polyethylene terephthalate PET, polybutylene terephthalate PBT, polycarbonate PC, or polyether ether ketone PEEK,

Further embodiments of the invention may wish to localise the use to the mesh skins only to regions where protrusions are required. In areas where no protrusions are required, the skin may be comprised of a unidirectional tape material, a stitched or knitted material. However, it may be beneficial to maximise the fiber amount in the skin layer and minimise apertures to ensure the highest possible mechanical performance of the composite sandwich structure in these areas.

For material optimization, it may be beneficial to limit the surface area covered by a skin material, whereby the skin material may even be substantially smaller than the final part. In this case the core material would flow beyond the skin layer and fill the part cavity allowing a reduction of the skin material required.

In an exemplary example a structural part according to the invention of roughly 3 m² impact protection plate for a battery housing was produced with a substantial flat surface on the side of the panel destined to face the road when mounted on a car and with mainly parallel long ribs formed on the surface facing towards the battery housing.

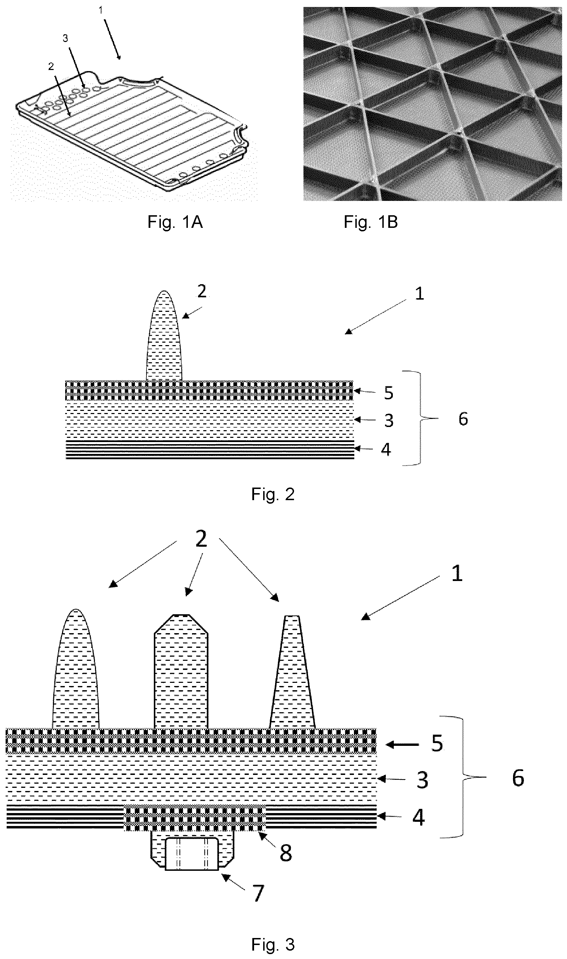

The first skin on the surface facing the battery housing comprising the protrusions in the form of parallel long ribs (comparable with those on figure 1) was made with a stitched multilayer bidirectional non-crimp fabric with a glass content of approximately 70% in a PP pre-impregnated polymer. While the second skin layer facing the road was made with a multilayer biaxial structure of unidirectional tapes, having between 65 and 80% of glass content in a PP pre-impregnated polymer.

In a first step, a first skin, for instance the second skin was placed inside a moulding tool, a premeasured amount of core material was placed on top of the skin in the moulding tool, and a second skin was placed on top of the core material. In a preferred case the first skin layer may be kept against the second mould half. The second mould half includes the voids for the long ribs. Upon closing the mould, the core material is pressed inside the mould cavity and partially forced through the mesh in the first skin layer to fill the cavities for the ribs.

The molten core material is pushed through the multiple mesh openings to fill the protrusion cavity or cavities, the rib will be integrally bound to the core material through the mesh structure preventing any weak breaking lines between the main body structure and the long ribs.

Although the ribs in our example were over the full length of the part, it could be shown that the ribs were evenly and fully filled with core material including the reinforcement fibers. The material pushed through a mesh opening was immediately mixed again with the material of the neighbouring macroscopic openings, hence no defect could be detected from pushing the molten core material through the mesh. On the contrary, the ribs formed showed well distributed fibre reinforcement of the core material throughout the rib structure.

If was further noticed that compared to a part made with a state-of-the-art full unidirectional tape material fully covering the surface, it was possible to obtain better ribs with a reduced press force.

The automotive structural part may be adapted on the edges of the part and or on cut outs in the middle of the part to comply with the design and construction of the car where the part is used. In particular cut out or holes for mounting means like for instance bolts an screws may be needed.

For this at least part of at least one edge or outer region on the part may be formed only by the core material alone, for instance to reduce the size of the skin layer or layers. This would not only ease the cutting but also reduce scrap material or off cuts. Alternatively, only core material and one skin layer, or at least one skin layer without core material may be used.

In some areas the thickness of the part may be designed to be much thinner. This may be achieved by reducing the thickness by pressing out the core material creating a structural part with at least part of at least one region which is reduced in thickness, whereby the core material between the skin layers is reduced or substantially eliminated.

The automotive structural part according to the invention may further comprise additional layers laminated to adjacent layer, preferably one of a thermoplastic foil, a metal layer, a mica layer, a flame reducing layer, an intumescent layer, an aesthetic layer, a haptic layer, a textile layer, a pile layer, a nonwoven layer, an adhesive layer and/or a foam layer.

It is beneficial to combine for instance a structural part according to the invention as impact protection close to a battery with the potential of a thermal runaway event, with a flame reducing or thermal barrier like a mica sheet, metal foil or flame reducing layer. This may be done also on part of the surface.

Motor vehicle, in particular an electric vehicle or truck, with an automotive structural part according to the invention, wherein the structural part, is used as an underfloor protection element, preferably arranged beneath energy storage units, in particular a high voltage battery or a pressure tank.

Use of an automotive structural part, according to the invention in a motor vehicle, truck or tractor as an impact protecting shield, interior panel, dash panel or partition, firewall, floor panel, underbody shield or under engine shield, body panel, or as part of/ or inside the battery housing.

Further embodiments of the invention may be derived from the description also by combining the different embodiments and examples of the invention and may be also derived from the description of the embodiments shown in the figures. The figures are schematic and not necessarily in scale.

### Brief description of drawings

Figure 1A Example of Structural part for automotive application and Figure 1B Example of a more complex rib structure.
Figure 2 Cross section of a first embodiment for a structural part according to the invention.
Figure 3 Cross section of a second embodiment for a structural part according to the invention
Figure 4 A-C are showing alternative filament mesh patterns according to the invention.
Figure 5 a photo of a filament mesh as used on a structural part.
Figure 6 Enlarged schematic figure of fig. 4A to show the dimensions of a filament mesh comprising macroscopic openings according to the invention.
Figure 7 is showing a possible method for producing a multi ply mesh with the macroscopic perforations according to the invention.

Figure 1A shows a structural automotive part 1 with protrusions 2, 3 on the surface. The protrusions can be for example in the form of ribs 2 or fixation points 3 (respectively depicted by lines and circles within the part). However other forms of protrusions may be formed as well with the layout according to the invention as for example shown in figure 1B. Figure 1B shows a complex rib structure to increase the stiffness of the part or form a spacing between the main body of the part and the part against the trim part may be placed.

Figure 2 shows the cross-section of an automotive structural part 1 with the first skin layer 5 comprising a protrusion 2 above it's skin surface. The skin layer 5 according to the invention comprises a mesh structure comprising filament bundles with macroscopic openings allowing the core material 3 to flow though the first skin layer 5 and form protrusions 2 using the core material 3 on the skin surface perpendicular to the skin 5.

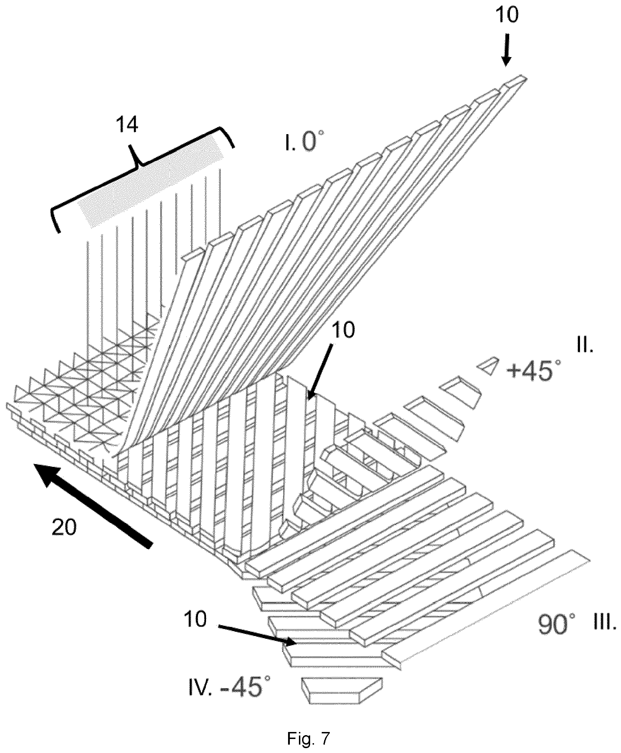

A second skin layer 4 may comprise of UD tape material. The first and second skin layer 5 and 4 and the core layer 3 in between the skin layers form a sandwich structure 6, whereby the skin layers counterbalance to reduce warpage of the automotive structural part and furthermore increase the stiffness of the part. Both skin layers may comprise of multiple plies of material laid in a different direction from the adjacent ply. Figure 7 shows this process in more detail. As the structural part may be produced under compression moulding using high level of pressure on the moulding press, core material may be pressed inside the skin layers and in case of the protrusion will be pressed through the skin and fill the cavity forming the protrusion. As the mesh is applied at least in the area of the protrusions, the core material is able to fill the cavity in an equal flow over the width of the protrusion preventing redirecting of the flow parallel to the surface of the skin layer. Thereby reducing any potential defective break lines between skin and material flow.

Figure 3 shows a cross section of a more complex structural trim part 1 with a first skin comprising more than one protrusion 2 above the surface, the first skin comprising a mesh 5 according to the invention. The protrusions 2 may have any design or shape. Preferably the wall of the protrusion is 90°or less in its angle perpendicular to the surface.

However, the structural trim part in this example has a local protrusion 7 on the opposite surface to form a cavity 7 for a fixation element. In case of such more local protrusions it may be beneficial to only apply a local area with the mesh structure 8 in the skin layer forming the area of the protrusion according to the invention, while the remaining skin surface is formed by a more closed material like for instance multiple plies of UD tape to form a denser structure. Such local protrusions for fixation elements may also be placed in a strip of mesh while the remaining is using a closed skin material.

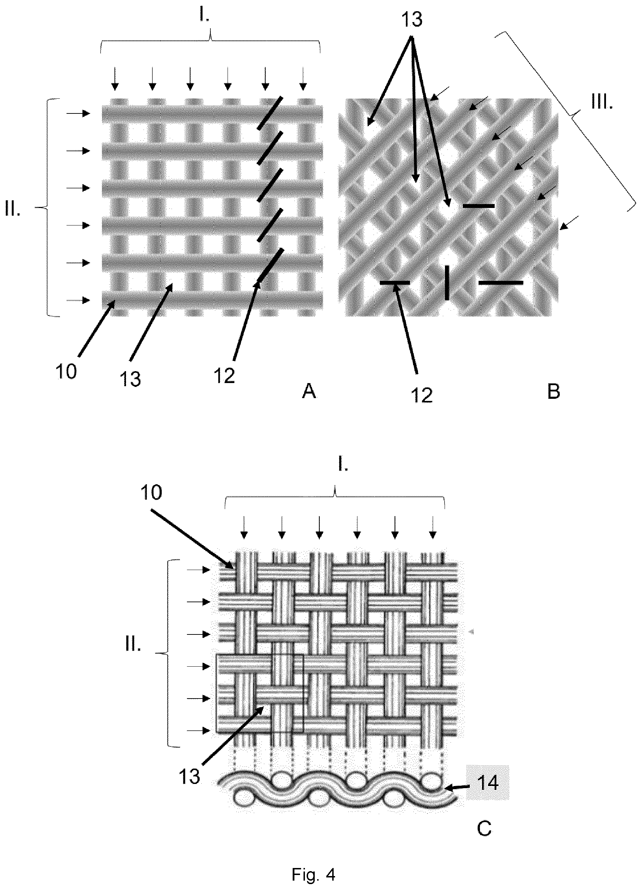

Figure 4 A-C shows examples of different layouts for the filament mesh structure according to the invention.

Figure 4A and B show examples of non-crimped fabrics NCFs. Figure 4 A comprises a first group I. of filament bundles 10 arranged parallel and spaced apart to neighbouring filament bundles within the same plane or layer indicated with parallel arrows. A second group II. of filament bundles parallel and spaced apart to neighbouring filament bundles within the same plane or layer (indicated with arrows) is arranged on top of the first group of filament bundles in an angle to the filament bundles in the neighbouring layer. Preferably the first and second group are in a 90° angle as shown in figure A. By organising bundles of filaments this way macroscopic openings are obtained between the bundles of filaments of the different layers or groups.

To ensure that these openings are maintained during the handling and or during the moulding of the trim part the contact points between the first and second group of bundles of filaments may be stitched together 12. Here indicated for only a part of the contact points. The stitching may be done for each point or in a pattern leaving out contact points. This may help to stabilize the fabric during moulding or help with forming of the shape of the structural part, in case a more fabric stretch is needed. Whereby the fabric is not stretching due to an elastic effect of the filament bundles but more due to a change in the angle between the first and second group during forming of the final part. For instance, an original 90° angle giving rise to a rectangle type macroscopic hole may be changed to 60° and 30° angles and a more diamond shaped macroscopic opening.

Figure 4B shows also different groups of filament bundles parallel and spaced apart. The lowest layer is in 0° direction while the 2 top layers are in 45° and -45° related to the lowest layer. This creates a variation in the shapes of the macroscopic openings 13 throughout the mesh. In such a case also the direction of the stitching 12 might be varied, to counteract on moving of the filaments bundles in the different layers relative to each other thereby changing the angles. The aim of the stitching is to stabilize the fabric structure and to prevent the closure of any opening perpendicular to the plane of the fabric and thereby prevent the flow of core material through the mesh. However, stitching and stretching thereby changing the angle within the fabric locally may be used to optimise the distribution of the macroscopic openings.

Figure 4C is showing an alternative fabric with also a first and a second group of filament bundles I and II. Spatial organised parallel to neighbouring filaments bundles within one plane or layer and in a different direction from the adjacent layer or group of filament bundles. However, in this case the filament bundles form the warp and weft of a woven structure. By weaving two group into one fabric they will be organised substantially within the same plane as can be seen from the cross section 14. However, this may interfere with the strength of the fabric in the final composite sandwich structure. Hence woven structures may form an alternative but are less preferred over NCFs.

Also, other structures may be used as long as macroscopic openings are formed perpendicular to the plane of the material, for instance knitted or crochet type structure or 3D woven or knitted structures may be used.

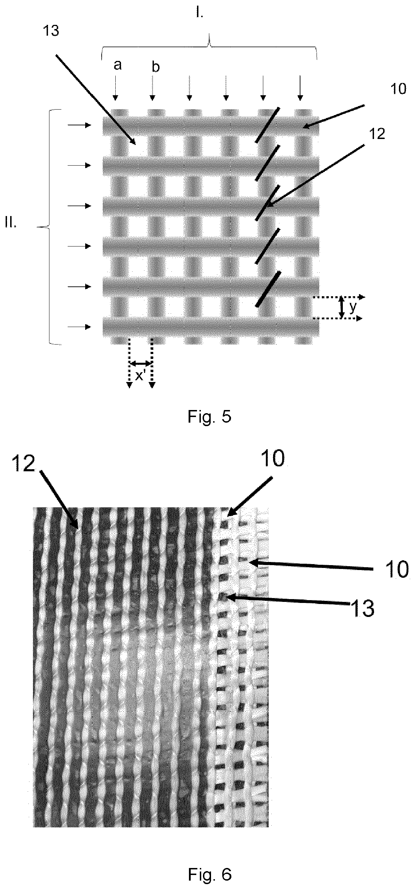

By varying the gap between at least 2 groups of filament bundles, the size of the macroscopic openings in the mesh structure can be controlled. In figure 5, the mesh structure from figure 4A is shown again. The macroscopic opening is defined by the distance x between the outside of a first bundle of filaments a and a second bundle of filaments b in the first group and the distance y of bundles in the second group, the opening formed by these overlapping bundles is the macroscopic opening needed for a better flow of core material through the skin to fill any protrusions above the skin. The surface area formed by the distance x and y is the area of the macroscopic opening. Depending on the shape of the opening formed between different layers of parallel bundles of filaments, the area calculation may vary. But a skilled person would be able to adapt the calculation. Preferably the area of the macroscopic opening is at least 0.25 mm². Preferably the area is not larger than 25 mm². The opening is depending needed is depending on the viscosity of the core material, the pressure of the moulding tool and the size of the cavity to be filled and may need to be adapted on a case by case situation. It is assumed that at least in the area of the protrusion an even pattern of openings is provided to get an even flow through the mesh into the protrusion cavity during moulding. Too large openings may have a negative effect of the overall mechanical performance of the final structural part.

Preferably the number of filaments within the bundles filaments within the first skin may be comparable to the number of filaments in for instance a normal UD tape in the second skin. Overall, the amount of filaments and layering on both sides should be balanced to prevent warpage.

Figure 6 shows a photo of a filament mesh which comprises two groups of parallel spaced apart bundles of filaments 10, where the bundles of filaments in the groups are differentially orientated so the filament bundles overlap and form a pattern of macroscopic openings 13 between the filament bundles. In the example shown in figure 6 the mesh structure is maintained with stitches 12 over all filament bundles at the point of overlap. In this example the area of the opening is 4 mm². The fabric shown is pre impregnated with a black resin for the main part.

By using the fabric shown, it was possible to create ribs on structural part produced with a D-LFT core with 30% glass fibers and a standard UD tape on the second skin of 6-8 plies and 70% glass filaments. The 2m² structural part was produced without substantial warpage and a better definition of the ribs if compared to a standard UD tape skin instead of the mesh.

Figure 7 shows schematically the production of a NCF with multiple layers I. to IV. with alternating direction defined in the direction of production as indicated with arrow 20. Group I. is parallel to the direction of production and indicated with 0°, Group II, is in 45° angle to the direction of production, group III. is in a 90° angle and finally group IV is in a -45° angle. All layers are stitched together 14 over the contact point of all layers stacked. The distance between the bundles within one layer should be chosen such that in the final fabric macroscopic openings substantial perpendicular to the plain of the fabric are formed. The opening should go substantially throughout the thickness of the fabric. Preferably a straight perpendicular opening to reduce the path through the fabric.

## Claims

1. Automotive structural part comprising a fiber reinforced thermoplastic core, and a first and a second skin, whereby the first and second skins cover opposite surfaces of the core thereby forming a sandwich and further comprising at least one protrusion raised above at least one of the skin surfaces facing away from the core and whereby the protrusion comprises core material, **characterised in that** the skin at least in the area of the protrusion on its surface, consists of a filament mesh comprising macroscopic openings.

2. Automotive structural part according to claim 1, whereby the filament mesh is a multilayer biaxial or multiaxial fabric formed from bundles of filaments and whereby the structure of the fabric comprises macroscopic openings between the bundles of filaments being spaced apart in all axial directions.

3. Automotive structural part according to claim 1 or 2, whereby the bundles of filaments are fixated at intersections of overlying bundles within the biaxial or multiaxial fabric to fixate the macroscopic openings.

4. Automotive structural part according to one of the preceding claims whereby the skin not comprising a protrusion comprises a multilayer biaxial or multiaxial fabric formed from bundles of filaments, preferably the fabric is comprising at least unidirectional tapes and/or non-crimp fabrics and/or Organosheets.

5. Automotive structural part according to one of the preceding claims whereby at least one of the skins comprises at least a multilayer structure, preferably a multilayer structure with at least between 2 and 12 layers, preferably between 2 and 8 layers.

6. Automotive structural part according to one of the preceding claims whereby the skin comprises filaments of at least one of glass, carbon, aramid, basalt and/or natural material or a combination of such materials.

7. Automotive structural part according to one of the preceding claims, whereby the skin is pre-impregnated with a polymer matrix, preferably with a thermoplastic matrix.

8. Automotive structural part according to one of the preceding claims whereby the core is a long fiber thermoplast (LFT), preferably a direct long fiber thermoplast (D-LFT).

9. Automotive structural part according to one of the preceding claims, whereby the thermoplastic core material preferably contains long fibers of glass, wherein the glass fibers preferably have a length of between 1 and 50mm.

10. Automotive structural part according to one of the preceding claims, whereby the thermoplastic material of the core and/or the resin of the skin comprises a polymer and or copolymer of polypropylene (PP), a polyester or a polyamide (PA).

11. Automotive structural part according to the one of the preceding claims, further comprising additional layers laminated to adjacent layer, preferably one of a thermoplastic foil, a metal layer, a mica layer, a flame reducing layer, an intumescent layer, an aesthetic layer, a haptic layer, a textile layer, a pile layer, a nonwoven layer, an adhesive layer and/ or a foam layer.

12. Automotive structural part according to one of the preceding claims whereby at least part of at least one edge or outer region on the part is formed only by the core material alone, or by the core material and one skin layer or by at least one skin layer without core material.

13. Automotive structural part according to one of the preceding claims whereby at least part of at least one region is reduced in thickness, whereby the core material between the skin layers is reduced or substantially eliminated.

14. An automotive structural part according to one of the preceding claims, whereby the protrusions are at least one of a rib, a grid structure, a bead, a stiffening element, a fixation point, an aesthetic element, like a logo, a channelling element, an embossing element, or an air guiding element.

15. Motor vehicle, in particular an electric vehicle or truck, with an automotive structural part according to any one of the preceding claims, wherein the structural part, is used as an underfloor protection element, preferably arranged beneath energy storage units, in particular a high voltage battery or a pressure tank.

16. Use of an automotive structural part, according to one of the preceding claims in a motor vehicle, truck or tractor as an impact protecting shield, interior panel, dash panel or partition, floor panel, underbody shield or under engine shield, body panel, or as part of/ or inside the battery housing.
